# EUROPÄISCHE PATENTSCHRIFT

(11) **EP 2 749 245 B1**
(45) Veröffentlichungstag und Bekanntmachung des Hinweises auf die Patenterteilung: **08.12.2021**
(21) Anmeldenummer: 12199526.0
(22) Anmeldetag: 27.12.2012
(51) Int. Cl.: A61C 13/20, F27B 17/02

(54) **VERNETZTE DENTALÖFEN**
CROSSLINKED DENTAL OVENS
FOURS DENTAIRES EN RÉSEAU

(43) Veröffentlichungstag der Anmeldung: 02.07.2014
(73) Patentinhaber: Vita Zahnfabrik H. Rauter GmbH & Co. KG, 79713 Bad Säckingen (DE)
(72) Erfinder: RAUH, Wolfgang, 79713 Bad Säckingen (DE); BAHOLZER, Thomas, 79713 Bad Säckingen (DE)
(74) Vertreter: dompatent von Kreisler Selting Werner - Partnerschaft von Patent- und Rechtsanwälten mbB

(56) Entgegenhaltungen:
- DE-A1- 3 927 998
- DE-A1- 19 824 497
- GB-A- 2 201 495

## Beschreibung

Die Erfindung betrifft eine Vernetzung von Dentalöfen mit Steuerung einer Verteilereinheit zur wahlweisen Fluidverbindung der Dentalöfen mit einer Vakuumpumpe.

Dentalöfen zur Bearbeitung von Zahnersatz weisen im Regelfall Brennkammern auf, die bei unterschiedlich hohen Temperaturen betrieben werden können. Ferner sind die Brennkammern im Bedarfsfall evakuierbar. Überdies ist es möglich, dass ein Dentalofen zusätzlich noch eine Verpresseinheit (Sinterofen) aufweist.

Mit der Anzahl an beispielsweise in einem Dentallabor aufgestellten Dentalöfen steigt auch der apparative Aufwand. Es ist bekannt, mehrere Dentalöfen zu vernetzen und entsprechend zeitlich aufeinander abgestimmt zu steuern. Allerdings ist bei diesen Vernetzungen jeder evakuierbaren Brennkammer eine eigene Vakuumpumpe zugeordnet.

Im Stand der Technik ist es bekannt, Dentalöfen mit mehr als einer Brennkammer zu versehen. Beispiele für Dentalöfen mit zwei Brennkammern sind in DE-U-70 01 180, DE-U-70 03 701, DE-B-1 235 562 und GB-A-2 201 495 beschrieben.

Aufgabe der Erfindung ist es, den apparativen Aufwand bei vernetzten Dentalöfen weiter zu reduzieren.

Zur Lösung dieser Aufgabe wird mit der Erfindung die Vernetzung von Dentalöfen vorgeschlagen, wobei diese Vernetzung versehen ist mit
- mehreren Dentalofengehäusen, wobei jedes Dentalofengehäuse mindestens eine Brennkammer aufweist und wobei mindestens zwei der Brennkammern evakuierbar sind,
- einer Vakuumpumpe,
- einer steuerbaren Verteilereinheit, die einerseits mit der Vakuumpumpe und andererseits mit den evakuierbaren Brennkammern verbunden ist, und
- einer Steuereinheit zur Steuerung der Verteilereinheit entsprechend von einem Benutzer vorgegebenen Befehlen.

Hierbei kann mit Vorteil vorgesehen sein, dass die Verteilereinheit eine der Anzahl der evakuierbaren Brennkammern gleichende Anzahl oder eine demgegenüber geringere Anzahl an steuerbaren EIN/AUS-Ventilen zur wahlweisen Fluidverbindung einer oder mehrerer evakuierbarer Brennkammern über die Verteilereinheit mit der Vakuumpumpe aufweist.

Die Erfindung geht bei der Vernetzung der Dentalöfen von mehreren Dentalofengehäusen aus, wobei jedes Dentalofengehäuse mindestens eine Brennkammer aufweist. Die Gesamtheit der Brennkammern umfasst mindestens zwei evakuierbare Brennkammern, die insbesondere in verschiedenen Dentalofengehäusen angeordnet sind. Zur Vernetzung der Dentalöfen gehört auch eine Vakuumpumpe sowie eine steuerbare Verteilereinheit, die einerseits mit der Vakuumpumpe und andererseits mit einer oder mehreren der evakuierbaren Brennkammern verbunden ist. Die Verteilereinheit wird von einer Steuereinheit entsprechend den von einem Benutzer vorgegebenen Befehlen (beispielweise Evakuieren einer bestimmten Brennkammer) angesteuert, wobei es möglich sein soll, dass die Befehle in Form von material- und/oder aufgabenabhängigen Brennprogrammen in der Steuereinheit des Ofens gespeichert und diese Brennprogramme auch im Fall vernetzter Öfen unabhängig voneinander automatisch abgearbeitet werden können (Brennprogramme laufen z.B. asynchron, automatisch in den vernetzten Öfen ab). In der Verteilereinheit sind mehrere steuerbare EIN/AUS-Ventile angeordnet, mit denen sich wahlweise eine Fluidverbindung zwischen der Vakuumpumpe und einer oder mehreren der evakuierbaren Brennkammern realisieren lässt. Somit ist es möglich, mehrere Dentalöfen mit evakuierbaren Brennkammern an eine (beispielsweise einzige) Vakuumpumpe anzuschließen.

Bei dem erfindungsgemäßen Konzept der Vernetzung von Dentalöfen hinsichtlich der Möglichkeit, mehreren der Dentalöfen eine Vakuumpumpe zuzuordnen, kann man sich die schon heute bekannte Steuerung mehrerer Dentalöfen zunutze machen. Da Vakuumpumpen für Dentalöfen mitunter recht kostspielig sein können und typischerweise nicht im Dauerbetrieb arbeiten (das Vakuum wird lediglich in bestimmten Abschnitten eines Brennprozesses benötigt und muss - eine vakuumdichte Brennkammer vorausgesetzt - nach Erzeugung lediglich noch "gehalten" werden, bis die Brennkammer wieder belüftet wird), bietet der erfindungsgemäße Ansatz insbesondere Kostenvorteile und senkt den Aufwand für Investitionen und insbesondere auch für eine platzsparende Unterbringung mehrerer Dentalöfen, da diese bzw. eine Gruppe von diesen lediglich mit einer einzigen Vakuumpumpe in Verbindung stehen.

Neben der Verbindung lediglich einzelner der evakuierbaren Brennkammern mit der Vakuumpumpe ist es selbstverständlich auch möglich, gleichzeitig in mehreren Brennkammern parallel jeweils ein Vakuum zu erzeugen. Die Vakuumpumpe sollte dabei dementsprechend leistungsstark ausgebildet sein.

Die wesentlichen Komponenten der erfindungsgemäßen Dentalofen-Vernetzung können wie folgt aufgelistet werden:
- eine oder mehrere Steuereinheiten zur Ansteuerung der Dentalöfen sowie eine oder mehrere Steuereinheiten zur Ansteuerung der Vakuumpumpe bzw. Vakuumpumpen und insbesondere der Verteilereinheiten zwischen einer Vakuumpumpe und den mehreren an die Vakuumpumpe anschließbaren Dentalöfen,
- eine oder mehrere Vakuumpumpen (in jedem Fall weniger Vakuumpumpen als evakuierbare Brennkammern),
- Vakuum-(EIN/AUS-)Ventile und möglicherweise weitere Steuerelemente zur Unterbrechung/Öffnung der Luftströme zwischen den Brennkammern und der diesen zugeordneten Vakuumpumpe und
- Software zur Steuerung der Dentalöfen, deren Brennkammern, der Vakuumpumpe(n) und der EIN/AUS-Ventile.

Als EIN/AUS-Ventile eignen sich beispielsweise Magnetventile und/oder Rückschlagventile. Paralleles Evakuieren der Brennkammern ist möglich, wohingegen ebenfalls paralleles bzw. separates Belüften, Zuschalten zur Vakuumerzeugung zu beliebigen Zeitpunkten möglich ist. Ebenso ist ein sequentielles Evakuieren einzelner Brennkammern möglich. Die Steuerung kann ferner eine Zeitsteuerung dergestalt aufweisen, dass stets abgewartet wird, bis eine Brennkammer oder eine Gruppe von Brennkammern evakuiert ist, um dann die Evakuierung einer nächsten Brennkammer bzw. einer nächsten Gruppe von Brennkammern zu starten. Das Evakuieren dauert im Regelfall nur wenige 10 Sekunden (beispielsweise bis zu 30 Sekunden pro Brennkammern). Es kann parallel und sequentiell evakuiert werden.

In vorteilhafter Weise kann gemäß der Erfindung ferner vorgesehen sein, dass die Vakuumpumpe in einem Gehäuse ohne insbesondere evakuierbare Brennkammer angeordnet ist. Hierbei kann die Vakuumpumpe eine gegenüber den Dentalofengehäusen separate Einheit bzw. Komponente sein.

Alternativ ist es möglich, dass die Vakuumpumpe in einem der Dentalofengehäuse angeordnet ist.

Was die Konfiguration der Verteilereinheit der erfindungsgemäßen Dentalofen-Vernetzung betrifft, so kann es zweckmäßig sein, wenn die Verteilereinheit eine mit der Vakuumpumpe verbundene Sammelleitung sowie mit von dieser abzweigenden, zu den Dentalofengehäusen mit evakuierbaren Brennkammern führenden Abzweigleitungen aufweist und die EIN-/AUS-Ventile in den Abzweigleitungen und/oder an den Abzweigungen der Abzweigleitungen von der Sammelleitung angeordnet sind. Diese Konzeption der Verteilereinheit umfasst alternativ eine Ringleitung als Sammelleitung oder aber eine Stichleitung als Sammelleitung, wobei die einzelnen Abzweigleitungen in beiden Fällen entweder von der Ringleitung oder von der Stichleitung abzweigen. Im Falle einer Stichleitung ist es auch möglich, dass die Abzweigleitungen von einem gemeinsamen Punkt sozusagen sternförmig verlaufen oder aber an verschiedenen Abzweigstellen der Stichleitung abzweigen.

In weiterer vorteilhafter Ausgestaltung der Erfindung kann vorgesehen sein, dass die Steuereinheit mehrere Ventilsteueruntereinheiten zur Steuerung jeweils eines EIN/AUS-Ventils aufweist, wobei jedem Dentalofengehäuse mit evakuierbarer Brennkammer eine Ventilsteueruntereinheit zugeordnet ist. Die Steuereinheit ist hierbei mit mehreren Teil- bzw. Untereinheiten zur Ansteuerung jeweils eines EIN/AUS-Ventils (Vakuumventil) versehen, wobei diese Ventilsteueruntereinheiten allgemein gesprochen jedem Dentalofengehäuse mit evakuierbarer Brennkammer zugeordnet sind. Hierbei ist es möglich, dass die Ventilsteueruntereinheiten in einer gemeinsamen Komponente, die getrennt von den Dentalofengehäusen ausgebildet oder aber auch in einem der Dentalofengehäuse integriert sein kann, angeordnet sind.

Ebenso ist es denkbar, dass bei der erfindungsgemäßen Dentalofen-Vernetzung die Steuereinheit als eine von den Dentalofengehäusen getrennte oder in einem der Dentalofengehäuse integrierte Komponente ausgebildet ist. Die Steuereinheit für die Verteilereinheit kann aber auch in einer einem Dentalofengehäuse zugeordneten Ansteuerkomponente, die getrennt von dem Dentalofengehäuse ausgeführt ist, angeordnet sein. Beispielsweise existieren am Markt Dentalöfen mit außerhalb der Dentalofengehäuse angeordneten Steuereinheiten, die z.B. als Touchscreens ausgeführt sind. Eine dieser Ansteuereinheiten für die Dentalofengehäuse der vernetzten Dentalöfen kann dann die Funktion übernehmen, der Ansteuerung der Verteilereinheit zu dienen.

Schließlich ist es auch möglich, dass die Verteilereinheit und die Steuereinheit eine gemeinsame Komponente bilden.

Die Erfindung wird nachfolgend anhand zweier Ausführungsbeispiele von Vernetzungsstrukturen für Dentalöfen sowie unter Bezugnahme auf die Zeichnung näher erläutert. Im Einzelnen zeigen dabei:
- Fig. 1: eine erste Dentalofen-Vernetzungsstruktur und
- Fig. 2: ein zweites Ausführungsbeispiel einer Dentalofen-Vernetzungsstruktur.

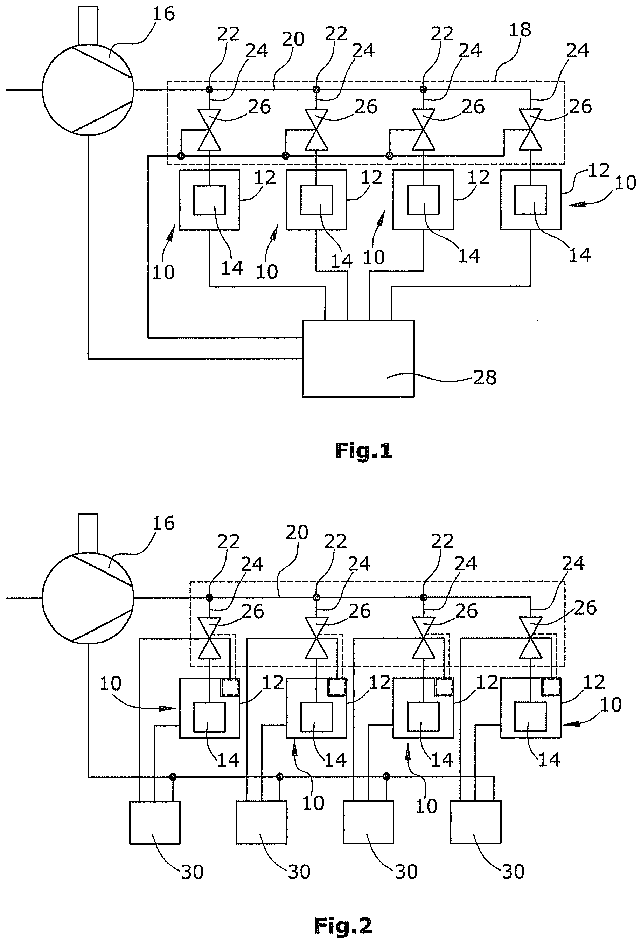

In Fig. 1 ist einer Gruppe von in diesem Ausführungsbeispiel vier Dentalöfen 10 mit jeweils einem Dentalofengehäuse 12 und jeweils einer evakuierbaren Brennkammer 14 eine (einzige) Vakuumpumpe 16 zugeordnet. Die Fluidverbindung zwischen der Vakuumpumpe 16 und den einzelnen Brennkammern 14 erfolgt über eine Verteilereinheit 18 mit einer mit der Vakuumpumpe 16 verbundenen Sammelleitung 20 und mit von dieser Sammelleitung 20 an Abzweigstellen 22 abzweigenden, zu den einzelnen Brennkammern 14 führenden Abzweigleitungen 24. In den Abzweigleitungen 24 finden sich EIN/AUS-Ventile 26, die von einer in diesem Ausführungsbeispiel zentralen Steuereinheit 28 angesteuert werden. Über diese zentrale Steuereinheit 28 lassen sich auch sämtliche Dentalöfen 10 steuern. Auch die Ansteuerung der Vakuumpumpe 16 erfolgt in diesem Ausführungsbeispiel über die Steuereinheit 28.

In diesem Ausführungsbeispiel ist die Anzahl an EIN/AUS-Ventilen 26 gleich der Anzahl der evakuierbaren Brennkammern 14. Dies muss nach der Erfindung nicht zwingend der Fall sein. Man könnte sich auch vorstellen, dass beispielsweise zwei oder mehrere der Brennkammern 14 (allerdings nicht sämtliche der evakuierbaren Brennkammern 14) jeweils gemeinsam evakuierbar sind, weshalb dann in der Verbindungsleitung zwischen der Vakuumpumpe 16 und diesen besagten Brennkammern 14 lediglich ein gemeinsames EIN/AUS-Ventil 26 angeordnet sein kann.

Während die Steuerung der EIN/AUS-Ventile 26 im Ausführungsbeispiel gemäß Fig. 1 über eine gemeinsame Steuereinheit 28 erfolgt, ist in Fig. 2 eine Vernetzungsstruktur dargestellt, bei der die den einzelnen Dentalöfen 10 jeweils zugeordneten einzelnen Ansteuereinheiten 30 zur Steuerung sowohl des einzelnen Dentalofens 10 als auch des der Brennkammer 14 dieses Dentalofens 10 zugeordneten EIN/AUS-Ventils 26 dienen. Die den einzelnen Dentalöfen 10 zugeordneten Ansteuereinheiten 30 können extern oder aber innerhalb eines Dentalofengehäuses 12 (in Fig. 2 in gestrichelten Linien angedeutet) angeordnet sein.

## Patentansprüche

1. Vernetzte Dentalöfen mit
- mehreren Dentalofengehäusen (12), wobei jedes Dentalofengehäuse (12) mindestens eine Brennkammer (14) aufweist und wobei mindestens zwei der Brennkammern (14) evakuierbar sind,
- einer Vakuumpumpe (16),
- einer steuerbaren Verteilereinheit (18), die einerseits mit der Vakuumpumpe (16) und andererseits mit den evakuierbaren Brennkammern (14) verbunden ist, und
- einer Steuereinheit (28,30) zur Steuerung der Verteilereinheit (18) entsprechend von einem Benutzer vorgegebenen Befehlen.

2. Vernetzte Dentalöfen nach Anspruch 1, **dadurch gekennzeichnet, dass** die Vakuumpumpe (16) in einem Gehäuse ohne Brennkammer (14) angeordnet ist.

3. Vernetzte Dentalöfen nach Anspruch 1, **dadurch gekennzeichnet, dass** die Vakuumpumpe (16) in einem der Dentalofengehäuse (12) angeordnet ist.

4. Vernetzte Dentalöfen nach einem der Ansprüche 1 bis 3, **dadurch gekennzeichnet, dass** die Verteilereinheit (18) eine mit der Vakuumpumpe (16) verbundene Sammelleitung (20) sowie mit von dieser abzweigenden, zu den Dentalofengehäusen (12) mit evakuierbaren Brennkammern (14) führenden Abzweigleitungen (24) aufweist und dass die EIN/AUS-Ventile (26) in den Abzweigleitungen (24) und/oder an den Abzweigungen der Abzweigleitungen (24) von der Sammelleitung (20) angeordnet sind.

5. Vernetzte Dentalöfen nach einem der Ansprüche 1 bis 4, **dadurch gekennzeichnet, dass** die Steuereinheit (28,30) mehrere Ventilsteueruntereinheiten zur Steuerung jeweils eines EIN/AUS-Ventils (26) aufweist, wobei jedem Dentalofengehäuse (12) mit evakuierbarer Brennkammer (14) eine Ventilsteueruntereinheit zugeordnet ist.

6. Vernetzte Dentalöfen nach Anspruch 5, **dadurch gekennzeichnet, dass** die Ventilsteueruntereinheiten zu einer gemeinsamen Baugruppe zusammengefasst sind.

7. Vernetzte Dentalöfen nach Anspruch 4, **dadurch gekennzeichnet, dass** in jedem Dentalofengehäuse (12) mit evakuierbarer Brennkammer (14) eine Ventilsteueruntereinheit angeordnet ist.

8. Vernetzte Dentalöfen nach einem der Ansprüche 1 bis 7, **dadurch gekennzeichnet, dass** die Verteilereinheit (18) eine von den Dentalofengehäusen (12) getrennte Komponente ist.

9. Vernetzte Dentalöfen nach einem der Ansprüche 1 bis 8, **dadurch gekennzeichnet, dass** die Steuereinheit (28,30) eine von den Dentalofengehäusen (12) getrennte Komponente ist.

10. Vernetzte Dentalöfen nach Anspruch 8 oder 9, **dadurch gekennzeichnet, dass** die Verteilereinheit (18) und die Steuereinheit (28,30) eine gemeinsame Komponente bilden.

11. Vernetzte Dentalöfen nach einem der Ansprüche 1 bis 10, **dadurch gekennzeichnet, dass** die Verteilereinheit (18) eine der Anzahl der evakuierbaren Brennkammern (14) gleichende Anzahl oder eine demgegenüber geringere Anzahl an steuerbaren EIN/AUS-Ventilen (26) zur wahlweisen Fluidverbindung einer oder mehrerer evakuierbarer Brennkammern (14) über die Verteilereinheit (18) mit der Vakuumpumpe (16) aufweist.

## Claims

1. Networked dental furnaces, comprising
- several dental furnace housings (12), wherein each dental furnace housing (12) comprises at least one combustion chamber (14), and wherein at least two of the combustion chambers (14) are evacuable,
- a vacuum pump (16),
- a controllable distribution unit (18) connected on the one hand to the vacuum pump (16) and on the other hand to the evacuable combustion chambers (14), and
- a control unit (28,30) for controlling the distribution unit (18) according to commands given by a user.

2. The networked dental furnaces according to claim 1, **characterized in that** the vacuum pump (16) is arranged in a housing without a combustion chamber (14).

3. The networked dental furnaces according to claim 1, **characterized in that** the vacuum pump (16) is arranged in one of the dental furnace housings (12)

4. The networked dental furnaces according to any one of claims 1 to 3, **characterized in that** the distribution unit (18) comprises a collecting pipe (20) connected to the vacuum pump (16) and branch pipes (24) branching off from the collecting pipe (20) and leading to the dental furnace housings (12) having evacuable combustion chambers (14), and **in that** the ON/OFF valves (26) are arranged in the branch pipes (24) and/or at the branches of the branch pipes (24) from the collecting pipe (20).

5. The networked dental furnaces according to any one of claims 1 to 4, **characterized in that** the control unit (28,30) comprises several valve control subunits for controlling respectively one ON/OFF valve (26), wherein each dental furnace housing (12) having an evacuable combustion chamber (14) is assigned a valve control subunit.

6. The networked dental furnaces according to claim 5, **characterized in that** the valve control subunits are combined into a common assembly group.

7. The networked dental furnaces according to claim 4, **characterized in that** a valve control subunit is arranged in each dental furnace housing (12) having an evacuable combustion chamber (14).

8. The networked dental furnaces according to any one of claims 1 to 7, **characterized in that** the distribution unit (18) is a component separated from the dental furnace housings (12).

9. The networked dental furnaces according to any one of claims 1 to 8, **characterized in that** the control unit (28,30) is a component separate from the dental furnace housings (12).

10. The networked dental furnaces according to claim 8 or 9, **characterized in that** the distribution unit (18) and the control unit (28, 30) form a common component.

11. The networked dental furnaces according to any one of claims 1 to 10, **characterized in that** the distribution unit (18) has a number of controllable ON/OFF valves (26) equal to the number of evacuable combustion chambers (14) or a number of controllable ON/OFF valves (26) smaller than the number of evacuable combustion chambers (14) for selective fluid connection of one or more evacuable combustion chambers (14) to the vacuum pump (16) via the distribution unit (18).

## Revendications

1. Fours dentaires en réseau avec
- plusieurs boîtiers de four dentaire (12), dans lesquels chaque boîtier de four dentaire (12) comporte au moins une chambre de combustion (14) et dans lesquels au moins deux des chambres de combustion (14) peuvent être évacuées,
- une pompe à vide (16),
- une unité de distribution commandable (18), laquelle est reliée d'un côté à la pompe à vide (16) et de l'autre côté à la chambre de combustion évacuable (14), et
- une unité de commande (28, 30) destinée à commander l'unité de distribution (18) conformément à un ordre prédéfini par un utilisateur.

2. Fours dentaires en réseau selon la revendication 1, **caractérisés en ce que** la pompe à vide (16) est disposée dans un boîtier sans chambre de combustion (14).

3. Fours dentaires en réseau selon la revendication 1, **caractérisés en ce que** la pompe à vide (16) est disposée dans un des boîtiers de four dentaire (12).

4. Fours dentaires en réseau selon l'une des revendications 1 à 3, **caractérisés en ce que** l'unité de distribution (18) comporte un conduit collecteur (20) relié à la pompe à vide (16) ainsi que des conduits de dérivation (24) dérivant de celui-ci et menant aux boîtiers de four dentaire (12) dotés de chambres de combustion évacuables (14) et **en ce que** les soupapes MARCHE/ARRÊT (26) sont disposées dans les conduits de dérivation (24) et/ou sur les dérivations des conduits de dérivation (24) du conduit collecteur (20).

5. Fours dentaires en réseau selon l'une des revendications 1 à 4, **caractérisés en ce que** l'unité de commande (28, 30) comporte plusieurs sous-unités de commande de soupape destinées à commander respectivement une soupape MARCHE/ARRÊT (26), dans lesquelles une sous-unité de commande de soupape est associée à chaque boîtier de four dentaire (12) doté d'une chambre de combustion évacuable (14).

6. Fours dentaires en réseau selon la revendication 5, **caractérisés en ce que** les sous-unités de commande de soupape sont assemblées en un module commun.

7. Fours dentaires en réseau selon la revendication 4, **caractérisés en ce qu'**une sous-unité de commande de soupape est disposée dans chaque boîtier de four dentaire (12) doté d'une chambre de combustion évacuable (14).

8. Fours dentaires en réseau selon l'une des revendications 1 à 7, **caractérisés en ce que** l'unité de distribution (18) est un composant séparé des boîtiers de four dentaire (12).

9. Fours dentaires en réseau selon l'une des revendications 1 à 8, **caractérisés en ce que** l'unité de commande (28, 30) est un composant séparé des boîtiers de four dentaire (12).

10. Fours dentaires en réseau selon la revendication 8 ou 9, **caractérisés en ce que** l'unité de distribution (18) et l'unité de commande (28, 30) forment un composant commun.

11. Fours dentaires en réseau selon l'une des revendications 1 à 10, **caractérisés en ce que** l'unité de distribution (18) comporte un nombre de soupapes MARCHE/ARRÊT commandables (26) égal au nombre de chambres de combustion évacuables (14) ou un nombre au contraire plus réduit de celles-ci destinées à la liaison fluidique sélective entre une ou plusieurs chambres de combustion évacuables (14) et la pompe à vide (16) par le biais de l'unité de distribution (18).
